# EUROPÄISCHE PATENTANMELDUNG

(11) **EP 4 506 717 A1**
(43) Veröffentlichungstag der Anmeldung: **12.02.2025**
(21) Anmeldenummer: 23191007.6
(22) Anmeldetag: 11.08.2023
(51) Int. Cl.: G01S 7/02, H01Q 1/42, H01Q 1/44, G01S 13/931

(54) **RADOM**

(71) Anmelder: Ulbrichts GmbH, 4690 Schwanenstadt (AT)
(72) Erfinder: SCHARPENACK, Georg, 4813 Altmünster (AT); RAFFELSBERGER,Martin, 4661 Roitham (AT); SCHABLINGER, Bernhard, 4690 Schwanenstadt (AT)
(74) Vertreter: Bardehle Pagenberg Partnerschaft mbB Patentanwälte Rechtsanwälte

(57) **Zusammenfassung**

Die vorliegende Erfindung betrifft ein Radom (10), welches zum Abdecken eines Fahrzeugradars eingerichtet ist, aufweisend: eine erste Kunststoffkomponente (1); eine zweite Kunststoffkomponente (2); mindestens eine zwischen der ersten Kunststoffkomponente (1) und der zweiten Kunststoffkomponente (1) ausgebildete Grenzfläche (4), wobei die erste Kunststoffkomponente (1) mit der zweiten Kunststoffkomponente (2) an der Grenzfläche (4) durch Spritzguss verbunden ist; einen Radarbereich (7), welcher für die Transmission von Radarstrahlung des Fahrzeugradars eingerichtet ist, wobei die mindestens eine Grenzfläche (4) zumindest teilweise im Radarbereich (7) angeordnet ist.

## Beschreibung

### 1. Gebiet der Technik

Die vorliegende Erfindung betrifft ein Radom zur Abdeckung eines Fahrzeugradars und ein Verfahren zu seiner Herstellung.

### 2. Stand der Technik

Moderne Kraftfahrzeuge weisen eine Vielzahl an Sensoren auf, welche Informationen über das Umfeld des Fahrzeugs aufnehmen, verarbeiten und an Steuergeräte weiterleiten. Neben optischen Systemen wie Kameras und Lidar (Light Detection and Ranging) und akustischen Systemen wie Ultraschall für kurze Reichweiten, etwa bei Parksensoren, werden besonders im Front- und Heckbereich Radarsensoren (Radar = radio detection and ranging) verbaut. Radarsensoren strahlen modulierte elektromagnetische Wellen ab, deren Wellenlängen im Automobilbereich bei etwa 24 GHz sowie im 77-79 GHz Band liegen. Die Radarsignale werden von anderen Fahrzeugen, Fußgängern, Fahrradfahrern oder Objekten am Fahrbahnrand reflektiert und die Reflektionen von dem abstrahlenden Sensor empfangen. Dieser berechnet aus den Reflektionen eine Liste erkannter Ziele mit Richtungs- und Entfernungsangaben und sendet diese an angeschlossene Steuergeräte. Auf diese Weise können Fahrassistenzsysteme wie adaptive Geschwindigkeitsregelung (Adaptive Cruise Control, ACC), Notbremsassistenten, Spurassistenten oder Funktionen des autonomen Fahrens unterstützt werden.

Radarsignale werden meist durch ein Antennenarray abgestrahlt. Die Einzelantennen des Arrays werden mit unterschiedlichen Amplituden und Phasen so angesteuert, dass die Radarsignale den Sensor in einer Vorzugsrichtung verlassen und die reflektierten Signale auch in Vorzugsrichtungen empfangen werden. Durch zeitliche Steuerung von Amplitude und Phase kann so ein definierter Winkelbereich vor und ggf. hinter und neben dem Fahrzeug abgetastet werden.

Um Radarsensoren zu schützen, aber auch der Optik wegen, werden Radarsensoren in Kraftfahrzeugen häufig mittels eines Radoms abgedeckt oder hinter ohnehin vorhandenen Fahrzeugteilen wie beispielsweise Stoßfängern verbaut. Bei einem Radom handelt es sich um eine Abdeckung, welche einerseits einem Radarsensor den notwendigen Schutz vor Staub, Schmutz, Wasser, Steinschlag etc. bietet und andererseits eine möglichst ungehinderte Transmission von Radarstrahlung erlaubt. Dies bezieht sich sowohl auf die Amplitudenabschwächung insgesamt als auch auf die Richtungsabhängigkeit der Abschwächung. Wünschenswert ist einerseits, dass die Gesamtamplitude möglichst wenig abgeschwächt wird, da die Radarstrahlen das Radom zweimal passieren, nämlich beim Abstrahlen und beim Empfangen der reflektierten Signale. Andererseits muss die Winkelabhängigkeit der Abschwächung unterhalb einer niedrigen Toleranzschwelle bleiben, da andernfalls die Richtung eines Radarziels nicht mehr ausreichend exakt bestimmt werden kann. Zudem können Inhomogenitäten in dem Radom eine zuverlässige Zielerfassung unmöglich machen oder tatsächliche nicht vorhandene Radarziele (Geisterziele) zur Folge haben. Inhomogenitäten zeigen sich daran, dass lokal stark variierende Radartransmissionen vorliegen, welche zu einer Brechung oder Streuung der Radarwellen führen können, ähnlich einem Riss oder Sprung in einer Glasscheibe oder einem Lufteinschluss in Wassereis.

### 3. Zusammenfassung der Erfindung

Aufgabe der vorliegenden Erfindung ist daher die Bereitstellung eines Radoms für Kraftfahrzeugradare, welches einerseits optisch ansprechend gestaltet ist und andererseits den Anforderungen an moderne Radarsysteme hinsichtlich Radartransmission genügt und zudem kostengünstig in der Herstellung ist.

Diese Aufgabe wird gelöst durch ein Radom gemäß Anspruch 1. Vorteilhafte Ausgestaltungen sind Gegenstand der abhängigen Ansprüche.

Das erfindungsgemäße Radom ist zum Abdecken eines Fahrzeugradars eingerichtet und weist eine erste Kunststoffkomponente und eine zweite Kunststoffkomponente auf. Ferner weist das Radom mindestens eine zwischen der ersten Kunststoffkomponente und der zweiten Kunststoffkomponente ausgebildete Grenzfläche auf, wobei die erste Kunststoffkomponente mit der zweiten Kunststoffkomponente an der Grenzfläche durch Spritzguss verbunden ist. Ferner weist das Radom einen Radarbereich auf, welcher für die Transmission von Radarstrahlung des Fahrzeugradars eingerichtet ist, wobei die mindestens eine Grenzfläche zumindest teilweise im Radarbereich angeordnet ist.

Das Radom gemäß der Erfindung ist zum Abdecken eines Fahrzeugradars eingerichtet. Dies bedeutet, dass beim regulären Betrieb des Fahrzeugradars einerseits die von dem Radar ausgestrahlten elektromagnetischen Wellen das Radom sowohl beim Abstrahlen als auch beim Empfangen reflektierter Wellen passieren und andererseits die elektromagnetischen Wellen nur innerhalb der Vorgaben des Radar- bzw. Fahrzeugherstellers beeinträchtigt werden. Dies betrifft sowohl die Gesamttransmission als auch deren Winkelabhängigkeit. Das Radom ist somit für den beabsichtigten Zweck, nämlich die Verwendung als Abdeckung für ein Kraftfahrzeugradar durch den Fahrzeug- bzw. Radarhersteller zugelassen.

Das erfindungsgemäße Radom weist weiter eine erste und eine zweite Kunststoffkomponente auf. Mithin handelt es sich um mindestens optisch voneinander abgrenzbare Abschnitte oder Teile des Radoms, welche die zwei unterschiedlichen Kunststoffkomponenten aufweisen. Die beiden Kunststoffkomponenten stoßen an mindestens einer Grenzfläche zusammen. Die Grenzfläche trennt somit die erste Kunststoffkomponente von der zweiten Kunststoffkomponente und grenzt beide voneinander ab. Ein erfindungsgemäßes Radom kann grundsätzlich mehrere solcher Grenzflächen aufweisen, mindestens jedoch eine. Beispielsweise könnte die erste Komponente und/oder die zweite Komponente in mehr als einem abgrenzbaren Bereich des Radoms vorliegen, sodass sich mehrere Grenzflächen ergeben. Bei mehreren Grenzflächen gilt die nachfolgende Beschreibung in Bezug auf die mindestens eine Grenzfläche für die weiteren Grenzflächen entsprechend.

Die mindesten eine Grenzfläche kann in einem beliebigen Winkel zu einer Oberfläche des Radoms angeordnet sein. Beispielweise kann die Grenzfläche rechtwinklig zur Oberfläche verlaufen oder zu dieser geneigt sein. Auch kann sich der Winkel im Verlauf der Grenzfläche ändern. Die Erfindung lässt hier großen Gestaltungsspielraum, ohne dass die Radartransmission des Radoms negativ beeinflusst wird.

Die beiden Kunststoffkomponenten stoßen an der Grenzfläche zusammen. Dabei gehen diese eine Verbindung mittels Spritzgusses ein. Beide Komponenten sind also in einem einzigen Spritzgussverfahren hergestellt und dadurch miteinander verbunden worden. Mithin handelt es sich um ein Mehrkomponentenspritzgussverfahren bzw. mindestens ein Zweikomponentenspritzgussverfahren. Dadurch kann an der Grenzfläche auf Kleber, Haftvermittler oder Ähnliches verzichtet werden, welches der Radartransmission abträglich wäre. Die Verbindung zwischen den Komponenten beruht rein auf chemischen Bindungskräften, welche durch die Kunststoffkomponenten selbst hervorgebracht werden.

Ferner weist das Radom einen Radarbereich auf, welcher für die Transmission von Radarstrahlung des Fahrzeugradars eingerichtet ist. Wie oben erläutert, werden innerhalb des Radarbereichs sämtliche Vorgaben des Fahrzeug- bzw. Radarherstellers in Bezug auf die Transmission von elektromagnetischen Radarsignalen eingehalten. Dies bedeutet einerseits, dass die Gesamttransmission nicht wesentlich beeinträchtigt wird und andererseits die Winkelabhängigkeit der Transmission nicht wesentlich verfälscht wird. Der Radarbereich ist somit für den Betrieb eines durch das Radom abgedeckten Radars wesentlich. Bevorzugt handelt es sich bei dem Radarbereich um einen Teilbereich des Radoms. Auf diese Weise können sich außerhalb des Radarbereichs beispielweise Befestigungsvorrichtungen wie Schraublöcher, Klemmen, Federn oder Ähnliches befinden, um das Radom an dem Fahrzeug vor dem Radar zu montieren.

Anspruchsgemäß ist zudem die mindestens eine Grenzfläche zumindest teilweise im Radarbereich angeordnet. Die Erfinder haben erkannt, dass auf diese Weise ein optisch ansprechendes Radom gestaltet werden kann, welches beispielsweise als solches nicht zu erkennen ist. Obwohl im Bereich des Radarbereichs eine Grenzfläche zwischen den beiden Kunststoffkomponenten verläuft, können aufgrund des verwendeten Spritzgussverfahrens zur Verbindung der beiden Kunststoffkomponenten Inhomogenitäten an der Grenzfläche vermieden werden. Zudem kann auf zusätzliche Verbindungskomponenten wie Kleber, Haftvermittler oder Ähnliches verzichtet werden, welche ihrerseits Inhomogenitäten hervorrufen und eine im Vergleich zu den Kunststoffkomponenten andere Radartransmission aufweisen können.

Obwohl die Grenzfläche der beiden Kunststoffkomponenten im Radarbereich verläuft, wird somit die Radartransmission nicht wesentlich beeinträchtigt. Dadurch wird eine Gestaltungsfreiheit für das Radom erzielt, welche eine Kaschierung der Radomfunktion, beispielsweise als ohnehin vorhandenes Fahrzeugteil, zulässt. Die verwendete Spritzgusstechnik ermöglicht gleichzeitig eine kostengünstige und optisch ansprechende Herstellung beispielweise im Vergleich zu Folien als Gestaltungselementen.

Die erste Kunststoffkomponente kann mit der zweiten Kunststoffkomponente an der mindestens einen Grenzfläche chemisch verbunden sein. Beispielsweise kann die chemische Verbindung eine Folge des Spritzgießens sein. Aufgrund der rein chemischen Verbindung kann auf Kleber, Haftvermittler und Ähnliches verzichtet werden.

Die erste Kunststoffkomponente kann Farbpigmente einer ersten Art aufweisen, wobei die zweite Kunststoffkomponente Farbpigmente einer zweiten Art aufweist, welche von der ersten Art verschieden ist, wobei vorzugsweise die erste Kunststoffkomponente keine Farbpigmente der zweiten Art aufweist und die zweite Kunststoffkomponente keine Farbpigmente der ersten Art aufweist. Auf diese Weise können die beiden Kunststoffkomponenten optisch voneinander unterschieden werden und das Radom kann optisch ansprechend gestaltet werden. Beispielsweise kann es sich bei der ersten Art von Farbpigmenten um weiße Farbpigmente handeln und bei der zweiten Art von Farbpigmenten um schwarze Farbpigmente. Auch ist es möglich, dass eine Kunststoffkomponente Farbpigmente enthält, die andere Kunststoffkomponente jedoch nicht.

In einer Ausführungsform der Erfindung sind die Farbpigmente der ersten Art und die Farbpigmente der zweiten Art keine Farbpigmente auf Metallbasis. Metalle können der Radartransmission abträglich sein und diese insgesamt abschwächen und/oder ungewünschte Richtungsabweichungen hervorrufen. Indem auf Metallpigmente verzichtet wird, wird die Radartransmission nicht wesentlich beeinträchtigt.

Das Radom kann im Radarbereich eine im Wesentlichen konstante Dicke aufweisen. Hierdurch wird die Winkelabhängigkeit der Radartransmission auf ein Minimum reduziert.

Das Radom kann eine dritte Kunststoffkomponente aufweisen, sowie mindestens eine zwischen der dritten Kunststoffkomponente und der ersten Kunststoffkomponente ausgebildete zweite Grenzfläche, wobei die mindestens eine zweite Grenzfläche zumindest teilweise im Radarbereich angeordnet ist; ferner mindestens eine zwischen der dritten Kunststoffkomponente und der zweiten Kunststoffkomponente ausgebildete dritte Grenzfläche, wobei die mindestens eine dritte Grenzfläche zumindest teilweise im Radarbereich angeordnet ist. Grundsätzlich können im Rahmen der vorliegenden Erfindung beliebig viele Kunststoffkomponenten verwendet werden, mindestens jedoch zwei. Eine dritte Komponente erweitert den Gestaltungsspielraum für das Radom erheblich. Die drei Komponenten können in einem einzigen Dreikomponentenspritzgussverfahren miteinander verbunden werden.

Die dritte Kunststoffkomponente kann die erste Kunststoffkomponente und die zweite Kunststoffkomponente überdecken und eine Deckschicht des Radoms bilden. Auf diese Weis kann einerseits das Radom selbst mit einer Schutzschicht versehen werden, andererseits kann die dritte Komponente, je nach Design des Radoms, auf der Rückseite, d.h. der dem Radar zugewandten Seite, als Trägerschicht für die erste und zweite Kunststoffkomponente dienen.

Die dritte Kunststoffkomponente kann transparent sein. Dies erweitert den optischen Gestaltungsspielraum erheblich, indem die erste und zweite Komponente gleichsam in die transparente Deckschicht eingegossen wirken. Andererseits dient eine transparente Deckschicht als Abschluss und verhindert so das Festsetzen von Schmutz an Strukturen, welche durch die erste und zweite Kunststoffkomponente gebildet werden. Schließlich können die erste und zweite Komponente aus optischen Gründen mit unterschiedlichen Dicken ausgestaltet werden, welche durch die transparente Deckschicht so kompensiert werden, dass das Radom insgesamt im Radarbereich eine im Wesentlichen konstante Dicke aufweist.

Die Deckschicht kann eine Dicke von 1-3 mm aufweisen. Die Erfinder haben festgestellt, dass dieser Bereich für die Schutzfunktion optimal ist und andererseits einen positiven optischen Eindruck hervorruft.

Bei zumindest einer der Kunststoffkomponenten kann es sich um Polymethylmethacrylat, PMMA handeln. PMMA ist ein nichtausschließliches Beispiel für einen im Rahmen der Erfindung geeigneten Kunststoff, gut im Spritzgussverfahren zu verarbeiten und erfüllt die Anforderung hinsichtlich Radartransmission. Die Erfindung ist nicht auf PMMA beschränkt. Andere Kunststoffe sind möglich.

Die Grenzflächen können jeweils im Radarbereich keine Gaseinschlüsse aufweisen. Gaseinschlüsse führen zu Inhomogenitäten und können die Verwendung als Radom unmöglich machen. Durch die Verwendung eines Mehrkomponentenspritzgussverfahrens zur Verbindung der Kunststoffkomponenten können Gaseinschlüsse wirksam vermieden werden.

Das Radom kann zumindest einen Anspritzpunkt aufweisen, welcher außerhalb des Radarbereichs angeordnet ist. Anspritzpunkte sind notwendig, um den die Kunststoffkomponenten bildenden Kunststoffe in die Spritzgusskavitäten zu spritzen. Es handelt sich in der Regel um Öffnungen in einer Kavität oder in einem die Kavität abschließenden Gegenstück. Die Öffnungen hinterlassen in der fertigen Kunststoffkomponente in der Regel fühl- und sichtbare Merkmale, nämlich sogenannte Anspritzpunkte. Indem diese außerhalb des Radarbereichs angeordnet sind, wird eine Beeinflussung der transmittierenden Radarwellen durch die Anspritzpunkte vermieden.

Bei dem Radom kann es sich um ein Emblem handeln. Unter einem Emblem wird eine Verzierung, ein Logo (z.B. eines Fahrzeugherstellers) eine Typenbezeichnung oder Ähnliches verstanden. Insbesondere das Fahrzeugherstellerlogo wird häufig im Frontbereich eines Fahrzeugs, z.B. auf, unter- oder oberhalb des Kühlergrills, angebracht. Erfindungsgemäß besteht aufgrund der Verwendung eines Mehrkomponentenspritzgussverfahrens die Möglichkeit, die Grenzfläche zweier Kunststoffkomponenten frei, insbesondere innerhalb des Radarbereichs anzuordnen, ohne die Radartransmission wesentlich (jedenfalls innerhalb Fahrzeughersteller- bzw. Radarherstellervorgaben) zu beeinträchtigen. Auf diese Weise können Fahrzeugherstellerlogos nachgebildet werden, welche gleichzeitig als Radom fungieren, obwohl man ihnen letztere Funktion nicht ansieht. Das Radar wird gleichsam hinter dem Fahrzeugherstellerlogo versteckt. Die Verwendung eines Mehrkomponentenspritzgussverfahrens gestattet die kostengünstige und optisch ansprechende Herstellung derartiger radomfähiger Logos.

Ein weiterer Aspekt der vorliegenden Erfindung betrifft ein Verfahren zur Herstellung eines Radoms wie hierin beschrieben, aufweisend die Schritte: Einspritzen der ersten Kunststoffkomponente in eine erste Kavität; Umsetzen der eingespritzten Kunststoffkomponente in eine zweite Kavität; Einspritzen der zweiten Kunststoffkomponente in die zweite Kavität, sodass sich die Grenzfläche zwischen der ersten Kunststoffkomponente und der zweiten Kunststoffkomponente ausbildet.

Vorzugsweise werden die Schritte in der genannten Reihenfolge durchgeführt.

Alles in Bezug auf das erfindungsgemäße Radom Gesagte, insbesondere dessen Vorteile, gelten für das Herstellungsverfahren entsprechend.

### 4. Kurze Beschreibung der Zeichnungen

Die vorliegende Erfindung wird im Folgenden anhand von bevorzugten Ausführungsbeispielen unter Bezugnahme auf die Zeichnungen erläutert. Die Zeichnung zeigen:
- Fig. 1A:: Ein Ausführungsbeispiel eines erfindungsgemäßen Radoms.
- Fig. 1B:: Einen Schnitt durch das Ausführungsbeispiel der Fig. 1A.
- Fig. 2A:: Eine Konstruktionszeichnung des Ausführungsbeispiels der Figuren 1A und 1B in einer Schrägansicht.
- Fig. 2B:: Eine Draufsicht auf das Radom der Fig. 2A.
- Fig. 2C:: Einen Schnitt durch das Radom der Fig. 2B entlang der Linie AA.

### 5. Ausführliche Beschreibung bevorzugter Ausführungsbeispiele

Im Folgenden werden nur einige mögliche Ausführungsformen der Erfindung im Detail beschrieben. Jedoch ist die vorliegende Erfindung nicht auf diese beschränkt und eine Vielzahl von anderen Ausführungsformen ist denkbar, ohne vom Umfang der Erfindung abzuweichen. Die vorgestellten Ausführungsformen können auf vielfache Weise modifiziert und miteinander kombiniert werden, wann immer sie kompatibel sind, und bestimmte Merkmale können weggelassen werden, soweit sie entbehrlich erscheinen. Insbesondere können die offenbarten Ausführungsformen durch Kombination bestimmter Merkmale einer Ausführungsform mit einem oder mehreren Merkmalen einer anderen Ausführungsform modifiziert werden.

Während die nachstehenden Ausführungsformen hauptsächlich unter Bezugnahme auf ein Radom beschrieben werden, wird der Fachmann erkennen, dass das Verfahren zur Herstellung eines entsprechenden Radoms gleichfalls von den genannten Merkmalen und Vorteilen profitiert.

In den gesamten vorliegenden Figuren und der Beschreibung beziehen sich die gleichen Bezugszeichen auf die gleichen Elemente. Die Figuren sind möglicherweise nicht maßstabsgetreu, und die relative Größe, Proportionen und Darstellung von Elementen in den Figuren können zur Klarheit, Veranschaulichung und Zweckmäßigkeit übertrieben sein und sind bei anderen Ausführungsformen der Erfindung entsprechend anders.

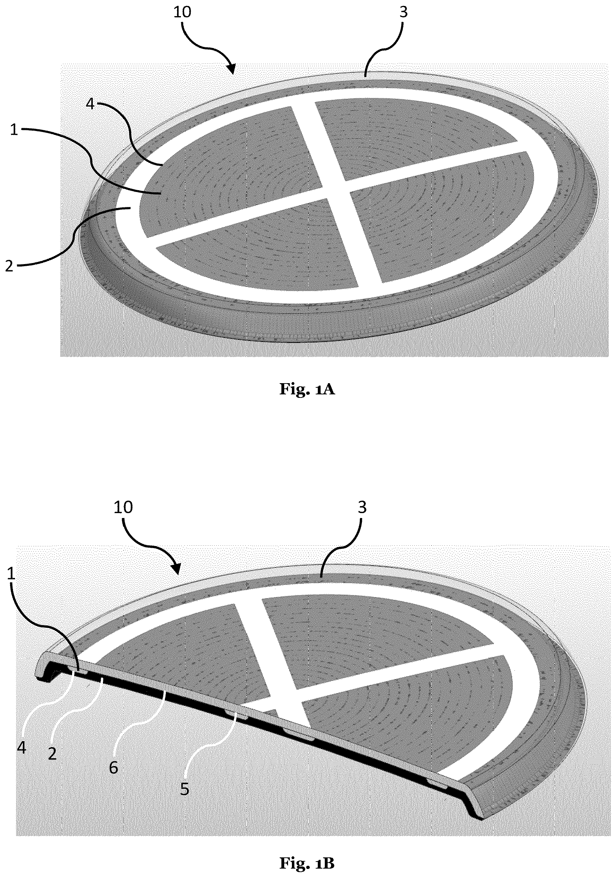

Fig. 1A zeigt ein Radom 10, welches zum Abdecken eines Fahrzeugradars (in den Figuren nicht gezeigt) eingerichtet ist, d.h. das Radom beeinflusst die Transmission der durch ein Fahrzeugradar, vor welchem das Radom 10 montiert ist, erzeugten Radarstrahlen innerhalb der Fahrzeughersteller- bzw.

Radarherstellervorgaben. Insbesondere bleiben die Abschwächung der Radartransmission und die Änderung des Abstrahlwinkels unterhalb gewisser Grenzwerte. Daher ist das Radom 10 so eingerichtet, dass es seine bestimmungsgemäßen Zwecke erfüllt, nämlich einerseits ein Fahrzeugradar zu schützen, dieses optisch zu kaschieren und gleichzeitig die ordnungsgemäße Funktion des Fahrzeugradars beim Betrieb eines Fahrzeuges zu ermöglichen.

Das Radom 10 weist im Ausführungsbeispiel der Fig. 1A eine erste Kunststoffkomponente 1, eine zweite Kunststoffkomponente 2 und ein dritte Kunststoffkomponente 3 auf. Die Erfindung ist nicht auf das Vorliegen von drei Kunststoffkomponenten beschränkt. Erfindungsgemäß weist das Radom mindestens zwei Kunststoffkomponenten auf. Eine andere Anzahl, z.B. vier oder mehr Kunststoffkomponenten ist möglich.

In dem Ausführungsbeispiel der Fig. 1A weisen die Kunststoffkomponenten 1, 2 und 3 PMMA auf. PMMA ist ein nicht-abschließendes Beispiel für einen Kunststoff, welcher im Rahmen der vorliegenden Erfindung verwendet werden kann. In anderen Ausführungsformen können andere Arten von Kunststoff verwendet werden und innerhalb eines einzigen Radoms könnten unterschiedliche Arten von Kunststoffen verwendet werden.

Ferner weist das Radom 10 mindestens eine zwischen der ersten Kunststoffkomponente 1 und der zweiten Kunststoffkomponenten 2 ausgebildete Grenzfläche 4 auf. Von dieser ist in der Fig. 1A ein Rand gezeigt, da sich die Grenzfläche von der durch die erste und zweite Kunststoffkomponente 1 und 2 gebildeten Oberfläche in das Radom 10 hinein erstreckt. In der Schnittansicht der Fig. 1B, welche das gleiche Ausführungsbeispiel zeigt wie die Fig. 1A, ist die Grenzfläche 4 im Schnitt innerhalb des Radoms 10 gezeigt. Die Grenzfläche 4 trennt die erste Kunststoffkomponente 1 von der zweiten Kunststoffkomponente 2. Im Ausführungsbeispiel der Fig. 1A gibt es eine einzige Grenzfläche 4 zwischen der ersten Kunststoffkomponente 1 und der zweiten Kunststoffkomponente 2. In anderen Ausführungsbeispielen können mehrere Grenzflächen ausgebildet sein, insbesondere, wenn die Kunststoffkomponenten mehrere voneinander abgrenzbare Bereiche bilden.

Die erste Kunststoffkomponente 1 ist mit der zweiten Kunststoffkomponente 2 an der Grenzfläche 4 durch Spritzguss verbunden. Beim Spritzgießen wird mit einer Spritzgießmaschine Kunststoff in einer Spritzeinheit plastifiziert, d.h. verflüssigt und in ein Spritzgießwerkzeug unter Druck eingespritzt. Ein Spritzgießwerkzeug wird z.B. durch eine Form und ein entsprechendes die Form abschließendes Gegenstück gebildet. Im Spritzgießwerkzeug geht der Werkstoff durch Abkühlung oder eine Vernetzungsreaktion wieder in den festen Zustand über und wird nach dem Öffnen des Spritzgießwerkzeugs als Fertigteil entnommen. Der Hohlraum des Werkzeuges, welcher auch als Kavität bezeichnet wird, bestimmt dabei die Form und die Oberflächenstruktur des fertigen Teiles. Das in den Figuren 1A und 1B gezeigt Radom 10 wird in einem Mehrkomponentenspritzgussverfahren hergestellt. Genauer gesagt handelt es sich um ein Dreikomponentenspritzgussverfahren, welches kurz auch als 3K-Spritzgussverfahren bezeichnet wird.

Durch das Spritzgießen erfolgt eine dauerhafte Verbindung zwischen der ersten Kunststoffkomponente 1 und der zweiten Kunststoffkomponente 2 an der Grenzfläche 4. Es handelt sich um eine chemische Verbindung, welche durch die beim Spritzgießen auftretenden Drücke und Temperaturen zustande kommt. Insbesondere können dadurch Gaseinschlüsse an den Grenzschichten der Kunststoffkomponenten vermieden werden, welche die Radartransmission beeinträchtigen würden.

Im Ausführungsbeispiel der Figuren 1A und 1B ist die zweite Kunststoffkomponente 2 in die erste Kunststoffkomponente 1 eingebettet. Die zweite Kunststoffkomponente 2 hat die Form eines "X" in einem Kreis. Diese Form ist jedoch nur beispielhaft und in anderen Ausführungsformen können die Kunststoffkomponenten beliebige Formen aufweisen. Beispielsweise könnte die zweite Kunststoffkomponente 2 die Form eines Logos eines Automobilherstellers haben oder es könnte sich um eine Typenbezeichnung handeln.

Die erste Kunststoffkomponente 1 weist Farbpigmente einer ersten Art auf und die zweite Kunststoffkomponente 2 weist Farbpigmente einer zweiten Art auf. Im Ausführungsbeispiel der Figuren 1A und 1B ist die erste Kunststoffkomponente 1 schwarz und die zweite Kunststoffkomponente 2 weiß. In anderen Ausführungsbeispielen würden entsprechend andere Farben verwendet werden. Insbesondere basieren diese Arten von Farbpigmenten nicht auf Metall und beeinflussen daher die Radartransmission nicht oder nur unwesentlich.

Im Ausführungsbeispiel der Figuren 1A und 1B weist das Radom 10 zusätzlich eine dritte Kunststoffkomponente 3 auf. Wie bereits erläutert, genügen erfindungsgemäß zwei Kunststoffkomponenten. Die dritte Kunststoffkomponente 3 ist in diesem Ausführungsbeispiel transparent und bedeckt die erste Kunststoffkomponente 1 und die zweite Kunststoffkomponente 2 in Form eine Deckschicht. Dadurch, dass die dritte Kunststoffkomponente 3 transparent ist, sind die erste Kunststoffkomponente 1 und die zweite Kunststoffkomponente 2 durch die dritte Kunststoffkomponente 3 sichtbar. Die Deckschicht 3 ist bis über den Rand der zweiten Kunststoffkomponente 2 gezogen.

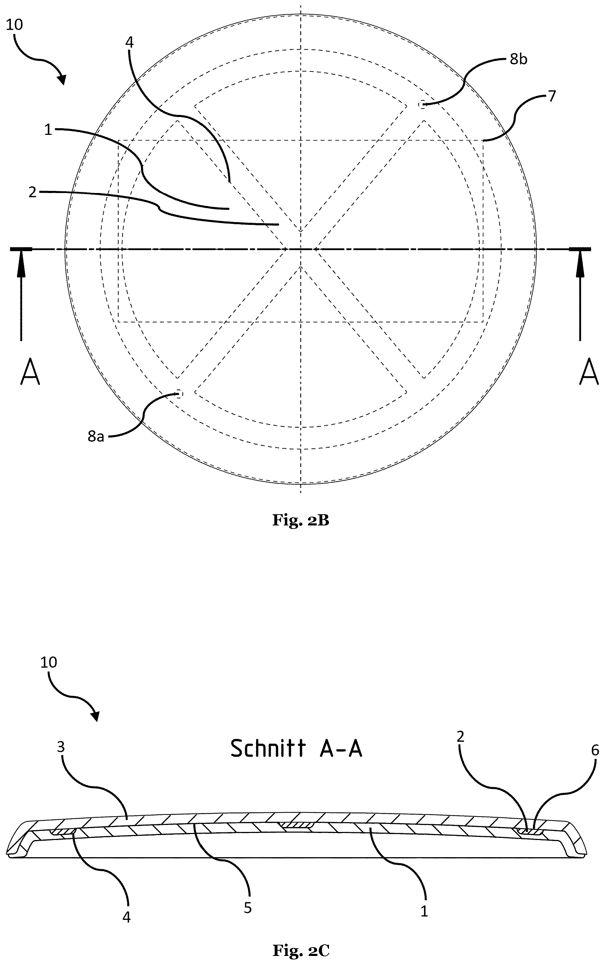

Es ergeben sich weitere Grenzflächen zwischen den Kunststoffkomponenten, nämlich eine zweite Grenzfläche 5 zwischen der dritten Kunststoffkomponente 3 und der ersten Kunststoffkomponente 1 und eine dritten Grenzfläche 6 zwischen der dritten Kunststoffkomponente 3 und der zweiten Kunststoffkomponente 2 (siehe Figuren 1B und 2C). In anderen Ausführungsbeispielen mit mehr als drei Kunststoffkomponenten ergäben sich möglicherweise entsprechend mehr Grenzflächen und deren Anzahl ist außerdem von der Anzahl der nicht miteinander verbundenen Teilbereiche der Kunststoffkomponenten abhängig.

Auch kann in anderen Ausführungsbeispielen die dritte Kunststoffkomponente nicht auf der Vorderseite des Radoms, sondern auf dessen Rückseite, d.h. der dem Radar zugewandten Seite angeordnet sein. Die dritte Kunststoffkomponente könnte dann als Trägerschicht für die anderen Kunststoffkomponenten dienen. In wieder anderen Ausführungsbeispielen ist eine Kunststoffschicht auf der Vorderseite als Deckschicht und eine weitere Kunststoffschicht auf der Rückseite als Trägerschicht angeordnet.

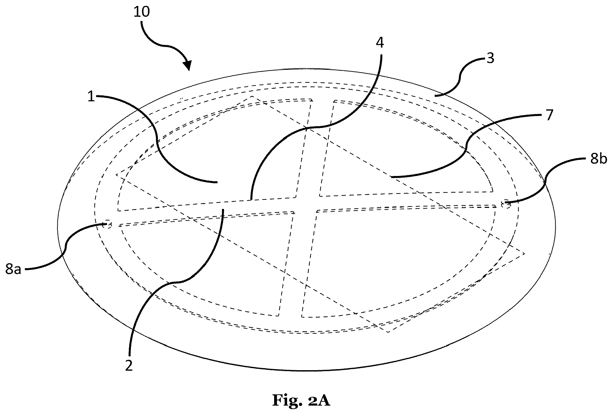

Die Figuren 2A, 2B und 2C zeigen Konstruktionszeichnungen des beispielhaften Radoms 10 aus den Figuren 1A und 1B. Wie in den Figuren 2A und 2B dargestellt, weist das Radom 10 ferner einen Radarbereich 7 auf, welcher für die Transmission von Radarstrahlung des Fahrzeugradars eingerichtet ist. Ein Radom, welches die Transmission der durch ein Fahrzeugradar, vor welchem das Radom montiert ist, erzeugten Radarstrahlen innerhalb der Fahrzeughersteller- bzw. Radarherstellervorgaben beeinflusst, weist also definitionsgemäß einen Radarbereich auf. Insbesondere bleiben die Abschwächung der Radartransmission und die Änderung des Abstrahlwinkels innerhalb des Radarbereichs 7 unterhalb gewisser Grenzwerte. Würden Radarstrahlen außerhalb des Radarbereichs 7 durch das Radom 10 hindurchtreten, so würde sich möglicherweise eine negative Beeinflussung der Transmission ergeben.

Im Ausführungsbeispiel der Figuren 2A, 2B und 2C ist der Radarbereich 7 rechteckig. In anderen Ausführungsbeispielen kann der Radarbereich eine andere Form aufweisen, beispielsweise quadratisch, elliptisch oder rund. Die Form kann von den Vorgaben des Fahrzeug- bzw. Radarherstellers abhängen und/oder von der Art des abzudeckenden Radars. Ein Radar, welches nur in horizontaler Richtung auflöst, benötigt einen länglichen Radarbereich, während ein zusätzlich in vertikaler Richtung auflösendes Radar einen eher quadratischen oder runden Radarbereich benötigt.

Im Ausführungsbeispiel der Figuren 2A, 2B und 2C hat der Radarbereich 7 eine Größe von 50 mm × 100 mm. In anderen Ausführungsbeispielen kann der Radarbereich eine andere Größe aufweisen. Die Größe kann von den Vorgaben des Fahrzeug- bzw. Radarherstellers, von der Größe des Radoms, vom Abstrahlwinkel des Radars, vom Abstand zwischen Radar und Radom und von weiteren Faktoren abhängen. Auch kann der Radarbereich gewisse Toleranzen aufweisen, d.h. in der konkreten Einbausituation können die Radarstrahlen den Radarbereich 7 nicht vollständig ausfüllen, sondern nur einen kleineren Teilbereich des Radarbereichs 7 abdecken, d.h. durchstrahlen.

Wie in den Figuren 2A und 2B gezeigt, ist mindestens eine Grenzfläche 4 zumindest teilweise im Radarbereich 7 angeordnet. Im Ausführungsbeispiel handelt es sich um die Grenzfläche 4 zwischen der ersten Kunststoffkomponente 1 und der zweiten Kunststoffkomponente 2. Da die dritte Kunststoffkomponente 3 in Form einer Deckschicht über der ersten Kunststoffkomponente 1 und der zweiten Kunststoffkomponente 2 liegt, sind auch Teile der Grenzfläche 5 zwischen der dritten Kunststoffkomponente 3 und der ersten Kunststoffkomponente 1, sowie Teile der Grenzfläche 6 zwischen der dritten Kunststoffkomponente 3 und der zweiten Kunststoffkomponente 2 im Radarbereich 7 angeordnet (vgl. Fig. 1B).

Im Ausführungsbeispiel der Figuren 2A und 2B verlaufen die Grenzflächen 4, 5 und 6 sowohl innerhalb als auch außerhalb des Radarbereichs 7. In anderen Ausführungsbeispielen können Grenzflächen auch vollständig innerhalb des Radarbereichs verlaufen, d.h. außerhalb des Radarbereichs würden diese Grenzflächen nicht verlaufen. Erfindungsgemäß verläuft jedoch zumindest ein Teil einer Grenzfläche innerhalb des Radarbereichs.

Die Fig. 2B zeigt das Radom 10 des Ausführungsbeispiels in einer Draufsicht und die Fig. 2C zeigt einen Schnitt entlang der Linie AA in der Fig. 2B. Wie in der Fig. 2C gezeigt, weist das Radom 10 im Radarbereich 7 eine im Wesentlichen konstante Dicke auf. Die Dicke darf einerseits nicht zu groß bemessen sein, um die Radartransmission nicht zu sehr zu beeinträchtigen und andererseits nicht zu dünn, damit das Radom ausreichend stabil ist und das darunterliegende Radar schützen kann.

Wie in den Figuren 2A und 2B gezeigt, weist das Radom 10 des Ausführungsbeispiels zwei sogenannte Anspritzpunkte 8a und 8b auf. Anspritzpunkte sind notwendig, um den die Kunststoffkomponenten 1, 2, 3 bildenden Kunststoffe in die Spritzgusskavitäten zu spritzen. Es handelt sich in der Regel um Öffnungen in einer Form oder in einem die Form abschließenden Gegenstück. Die Öffnungen hinterlassen in der fertigen Kunststoffkomponente in der Regel fühl- und sichtbare Merkmale, nämlich die genannten Anspritzpunkte. Im Ausführungsbeispiel sind die Anspritzpunkte 8a und 8b außerhalb des Radarbereichs 7 angeordnet. Dadurch wird eine Beeinflussung der transmittierenden Radarwellen durch die Anspritzpunkte 8a und 8b vermieden.

In anderen Ausführungsbeispielen weist das Radom 10 mehr oder weniger als zwei Anspritzpunkte auf. Dies kann von der Gestaltung des Radoms 10, den verwendeten Kunststoffen, insbesondere deren Fließeigenschaften, und Prozessparametern abhängen.

Auch kann in anderen Ausführungsbeispielen das Radom außerhalb des Radarbereichs Befestigungsvorrichtungen wie Schraublöcher, Klemmen, Federn oder Ähnliches aufweisen, um das Radom an dem Fahrzeug vor dem Radar zu montieren.

Wie bereits erläutert, wird das Radom 10 des in den Figuren dargestellten Ausführungsbeispiels in einem Dreikomponentenspritzgussverfahren hergestellt. Hierbei wird die erste Kunststoffkomponente 1 in eine erste Kavität unter Druck und Hitze an den bereits erläuterten Einspritzpunkten eingespritzt. Die erste Kavität kann von einer Form und einem entsprechenden, die Form abschließenden Gegenstück gebildet werden. Die erste Kavität definiert somit die Form der ersten Kunststoffkomponente 1. Anschließend wird die eingespritzte erste Kunststoffkomponente 1 in eine zweite Kavität umgesetzt, d.h. aus der ersten Kavität entfernt und in die zweite Kavität eingesetzt. Die erste Kunststoffkomponente 1 kann hierzu in der Form verbleiben, welche von einem ersten, die erste Kavität abschließenden Gegenstück, auf ein zweites, die zweite Kavität abschließendes Gegenstück gefahren wird.

Die von der Form und dem zweiten Gegenstück gebildete zweite Kavität ist größer als die erste Kavität, da diese den für die zweite Kunststoffkomponente 2 notwendigen Hohlraum enthält. Die zweite Kunststoffkomponente 2 wird sodann in die zweite Kavität an den bereits erläuterten Einspritzpunkten eingespritzt und verbindet sich chemisch mit der ersten Kunststoffkomponente 1, welche bereits in der Form ist.

Schließlich wird die Form mit der ersten und zweiten Kunststoffkomponente 2 ein zweites Mal auf ein drittes Gegenstück umgesetzt, welches zusammen mit der Form eine dritte Kavität bildet, welche wiederum einen Hohlraum für die einzuspritzende dritte Kunststoffkomponente 3 aufweist. Die dritte Kunststoffkomponente 3 wird sodann in den Hohlraum an den bereits erläuterten Einspritzpunkten eingespritzt und verbindet sich chemisch mit der ersten und zweiten Kunststoffkomponente. Bei Ausführungsbeispielen mit zwei Kunststoffkomponenten würden diese Schritte, nämlich das Umsetzen auf das dritte Gegenstück und Einspritzen der dritten Kunststoffkomponente entfallen. Bei mehr als drei Komponenten gäbe es entsprechend mehr Umsetz- und Einspritzschritte.

Nach dem letzten Einspritzschritt wird das fertige Radom 10 aus der Form entnommen und kühlt ggf. ab. Nachbearbeitungsschritte können darauf folgen.

Alles in Bezug auf das erfindungsgemäße Radom Gesagte, insbesondere dessen Vorteile, gelten für das beschriebene Herstellungsverfahren entsprechend.

## Patentansprüche

1. Radom (10), welches zum Abdecken eines Fahrzeugradars eingerichtet ist, aufweisend:
eine erste Kunststoffkomponente (1);
eine zweite Kunststoffkomponente (2);
mindestens eine zwischen der ersten Kunststoffkomponente (1) und der zweiten Kunststoffkomponente (1) ausgebildete Grenzfläche (4), wobei die erste Kunststoffkomponente (1) mit der zweiten Kunststoffkomponente (2) an der Grenzfläche (4) durch Spritzguss verbunden ist;
einen Radarbereich (7), welcher für die Transmission von Radarstrahlung des Fahrzeugradars eingerichtet ist, wobei die mindestens eine Grenzfläche (4) zumindest teilweise im Radarbereich (7) angeordnet ist.

2. Radom (10) nach Anspruch 1, wobei die erste Kunststoffkomponente (1) mit der zweiten Kunststoffkomponente (2) an der mindestens einen Grenzfläche (4) chemisch verbunden ist.

3. Radom (10) nach einem der Ansprüche 1-2, wobei die erste Kunststoffkomponente (1) Farbpigmente einer ersten Art aufweist, wobei die zweite Kunststoffkomponente (2) Farbpigmente einer zweiten Art aufweist, welche von der ersten Art verschieden ist, wobei vorzugsweise die erste Kunststoffkomponente (1) keine Farbpigmente der zweiten Art aufweist und die zweite Kunststoffkomponente keine Farbpigmente der ersten Art aufweist.

4. Radom (10) nach Anspruch 3, wobei die Farbpigmente der ersten Art und die Farbpigmente der zweiten Art keine Farbpigmente auf Metallbasis sind.

5. Radom (10) nach einem der Ansprüche 1-4, wobei das Radom (10) im Radarbereich (7) eine im Wesentlichen konstante Dicke aufweist.

6. Radom (10) nach einem der Ansprüche 1-5, weiter aufweisend:
eine dritte Kunststoffkomponente (3);
mindestens eine zwischen der dritten Kunststoffkomponente (3) und der ersten Kunststoffkomponente (1) ausgebildete zweite Grenzfläche (5),
wobei die mindestens eine zweite Grenzfläche (5) zumindest teilweise im Radarbereich (7) angeordnet ist;
mindestens eine zwischen der dritten Kunststoffkomponente (3) und der zweiten Kunststoffkomponente (2) ausgebildete dritte Grenzfläche (6),
wobei die mindestens eine dritte Grenzfläche (6) zumindest teilweise im Radarbereich (7) angeordnet ist.

7. Radom (10) nach Anspruch 6, wobei die dritte Kunststoffkomponente (3) die erste Kunststoffkomponente (1) und die zweite Kunststoffkomponente (2) überdeckt und eine Deckschicht des Radoms (10) bildet.

8. Radom (10) nach einem der Ansprüche 6-7, wobei die dritte Kunststoffkomponente (3) transparent ist.

9. Radom nach einem der Ansprüche 6-8, wobei die Deckschicht eine Dicke von 1-3 mm aufweist.

10. Radom (10) nach einem der Ansprüche 1-9, wobei es sich bei zumindest einer der Kunststoffkomponenten (1, 2, 3) um Polymethylmethacrylat, PMMA handelt.

11. Radom (10) nach einem der Ansprüche 1-10, wobei die Grenzflächen (4, 5, 6) jeweils im Radarbereich (7) keine Gaseinschlüsse aufweisen.

12. Radom (10) nach einem der Ansprüche 1-11, weiter aufweisend zumindest einen Anspritzpunkt (8a, 8b), welcher außerhalb des Radarbereichs (7) angeordnet ist.

13. Radom (10) nach einem der Ansprüche 1-12, wobei es sich bei dem Radom (10) um ein Emblem handelt.

14. Verfahren zur Herstellung eines Radoms (10) nach einem der Ansprüche 1-13, aufweisend die Schritte:
Einspritzen der ersten Kunststoffkomponente (1) in eine erste Kavität;
Umsetzen der eingespritzten Kunststoffkomponente (1) in eine zweite Kavität;
Einspritzen der zweiten Kunststoffkomponente (2) in die zweite Kavität, sodass sich die Grenzfläche zwischen der ersten Kunststoffkomponente (1) und der zweiten Kunststoffkomponente (2) ausbildet.
